# DEMANDE DE BREVET EUROPEEN

(11) **EP 1 477 289 A2**
(43) Date de publication de la demande: **17.11.2004**
(21) Numéro de dépôt: 04380009.3
(22) Date de dépôt: 12.01.2004
(51) Int. Cl.: B29C 45/16, B29C 45/37

(54) **Système de cassure facile pour matériau thermoplastique**

(30) Priorité: 15.01.2003 ES 200300088
(71) Demandeur: Pla Estrada, Ma Teresa, Tortosa (Tarragona) (ES); Codorniu Rosello, Ma Cinta, Tortosa (Tarragona) (ES)
(72) Inventeur: Pla Estrada, Ma Teresa, Tortosa (Tarragona) (ES); Codorniu Rosello, Ma Cinta, Tortosa (Tarragona) (ES)

(57) **Abrégé**

La plupart des matériaux thermoplastiques injectés ne permettent pas la réalisation d'une ligne de cassure facile comme celle qui est nécessaire pour les couvercles métalliques à ouverture facile.

Même si on affaiblit l'endroit ou l'on veut faire le chemin de la cassure facile, si les lignes d'écoulement du matériau, lors du remplissage du moule, croisent la ligne affaiblie, il n'est plus possible de casser cette partie affaiblie et de réussir à ce que la cassure suive le chemin défini par cet affaiblissement.

Avec le système revendiqué, on peut faire un chemin de cassure facile qui ne sera pas croisé par les lignes d'écoulement pendant le remplissage du moule.

## Description

La plupart des matériaux thermoplastiques injectés ne permettent pas la réalisation d'une ligne de cassure facile comme celle qui est nécessaire pour les couvercles métalliques à ouverture facile.

Même si on affaiblit l'endroit ou l'on veut faire le chemin de la cassure facile, si les lignes d'écoulement du matériau, lors du remplissage du moule, croisent la ligne affaiblie, il n'est plus possible de casser cette partie affaiblie et de réussir à ce que la cassure suive le chemin défini par cet affaiblissement.

Avec le système revendiqué, on peut faire un chemin de cassure facile qui ne sera pas croisé par les lignes d'écoulement pendant le remplissage du moule.

### DESCRIPTION DES DESSINS

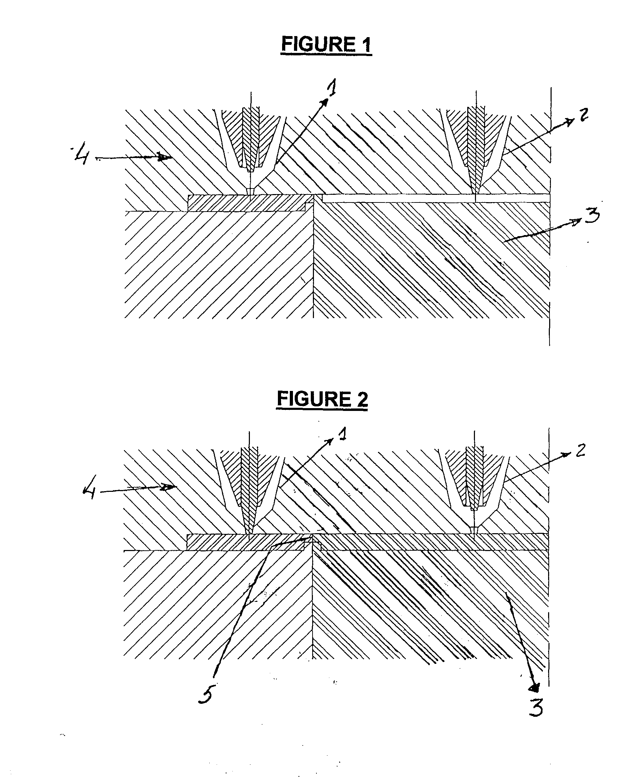

Sur la figure 1, on voit le moule fermé préparé pour l'injection du matériau thermoplastique. Le moule dispose de deux entrées d'injection (1 et 2) obturées au moyen de vannes à aiguille.

Au début de l'injection, il y a la cavité d'injection en position avancée par rapport au noyau 3 de la partie de la fermeture du moule qui touche la zone 4.

La vanne de fermeture de l'entrée de plastique 1 est ouverte et celle de l'entrée de plastique 2 est fermée.

Le plastique rempli la cavité jusqu'au niveau permis par la fermeture du noyau 3, où il touche la cavité de la zone 4.

Une fois remplie cette zone de la cavité, la vanne d'entrée de plastique 1 se ferme et la vanne d'entrée 2 s'ouvre en faisant reculer en même temps le noyau 3 (figure 2).

Lorsque la vanne d'entrée de plastique 2 s'ouvre, et que le noyau 3 ne touche plus la cavité de la zone 4, on peut remplir de plastique la zone du moule qui avait été laissée vide à la figure 1. Le matériau qui passe par l'entrée de plastique 2 arrive à se souder avec le matériau qui avait passé par l'entrée de plastique 1.

Lorsque le moule est complètement rempli, on a la ligne d'union soudée entre le plastique entré par 1 et celui entré par 2, ce qui nous transforme la zone affaiblie d'épaisseur 5 en un chemin de cassure facile qui n'a pas été croisé par aucune ligne d'écoulement d'entrée de matériau.

Les termes sous lesquels ce mémoire a été rédigé seront considérés au sens large et non pas limitatif.

Les matériaux, la forme, les dimensions et la disposition des éléments seront susceptibles de variation pourvu que cela ne représente pas une altération des caractéristiques essentielles de l'invention revendiquées comme suit :

## Revendications

1. **SYSTÈME DE CASSURE FACILE POUR MATÉRIAU THERMOPLASTIQUE** dont la caractéristique est qu'il a été obtenu par remplissages partiels du moule définis par le profil d'un noyau rétrécis sable qui coïncide avec une zone affaiblie d'une section diminuée.

2. **SYSTÈME DE CASSURE FACILE POUR MATÉRIAU THERMOPLASTIQUE**, selon la revendication précédente, **caractérisé** en plus par le fait qu'il a été obtenu avec la coïncidence entre une zone débilitée d'une section diminuée et une soudure entre différentes parties du moule.

3. **SYSTÈME DE CASSURE FACILE POUR MATÉRIAU THERMOPLASTIQUE**, selon les revendications précédentes, **caractérisé** en plus par le fait qu'il a été obtenu sans lignes d'écoulement qui croisent la zone affaiblie d'une section diminuée.
